# EUROPEAN PATENT APPLICATION

(11) **EP 0 850 560 A2**
(43) Date of publication of application: **01.07.1998**
(21) Application number: 97660133.6
(22) Date of filing: 27.11.1997
(51) Int. Cl.: A01G 1/00

(54) **Culture medium package for growing plants**

(30) Priority: 27.11.1996 FI 964722
(71) Applicant: BIOLAN OY, SF-27501 Kauttua (FI)
(72) Inventor: Haukioja, Markku, 27130 Eurajoki as (FI); Bäcklund, Antero, 27500 Kauttua (FI); Mälkiänen, Paavo, 27510 Eura (FI); Nummelin, Timo, 27510 Eura (FI); Jalava, Anssi, 27670 Mannila (FI)
(74) Representative: LEITZINGER OY

(57) **Abstract**

The invention relates to a culture medium package suitable for growing plants, especially in greenhouse production. The culture medium package contains a basically fertilized or non-fertilized culture medium portion (1) and a fertilizer portion (2) in a direct contact therewith, the fertilizer contained therein being blended by no more than to a slight degree with the culture medium. The fertilizer portion (2) is in such a condition that the plant roots are able to penetrate therein. Thus, no supplemental fertilization is required during the growing season.

## Description

The present invention relates to a culture medium package suitable for growing plants, especially in greenhouse production.

One of the key problems in ecological greenhouse production is the supply of a sufficient amount of nutrients for the disposal of plants, especially when growing greenhouse plants using plenty of nutrients. On the one hand, this problem is generally resolved by using quite a large volume of culture medium per plant and, on the other hand, by providing the plants during a growing season with rations of supplemental fertilization in the form of solid or liquid fertilizers.

A large amount of culture medium per plant incurs substantial extra costs when establishing a plant bed and complicates the replacement of a culture medium, which nevertheless may be necessary e.g. in terms of the preventation of plant diseases. The dosage of fertilizers acceptable in ecological farming as a supplemental fertilizer for a greenhouse is often technically quite inconvenient and incurs significant costs. In certain recent tests, organogenic fertilizers have been used also as separate storage fertilization in a bed of culture medium.

Prior known are culture medium packages, wherein the fertilizer is blended throughout the culture medium. Hence, it is not possible to use such a large amount of fertilizer that would suffice for the duration of an entire growing season. This problem is particularly eminent in greenhouse farming, when so-called restricted plant beds are used for growing vegetables, such as greenhouse cucumber, tomato, or paprika, which require plenty of nutrients.

Prior known are also culture medium solutions, wherein the culture medium package is adapted to include such a separate fertilizer portion which is protected against the penetration of plant roots e.g. with a dense fiber layer (e.g. Patent application WO 94/06274 (A01 G9/10) or a special membrane layer (e.g. Patent publication US A 4224048 (A01 G29/00)). In these, the fertilizer is released for the disposal of plants gradually through dissolution or as a result of an osmosis/reversed-osmosis process.

A culture medium package of the invention is different from the above solutions in the sense that a fertilizer portion contained therein is in a direct contact with the rest of the culture medium without a separating screen, web, or membrane and the fertilizer portion is in such a condition that the roots of plants are capable of penetrating therein. Thus, after the moistening taking place at the start of cultivation, the amount of nutrients contained in the fertilizer portion is in principle completely at the disposal of a plant and the migration of nutrients from the fertilizer portion to a plant is directly determined by the active nutrient intake of the plant roots.

The invention is characterized in that the culture medium package contains a basically fertilized or non-fertilized culture medium portion and a fertilizer portion, consisting of at least primarily organogenic or biogenic fertilizers or slow-dissolving mineral fertilizers or a mixture thereof, the fertilizer contained therein being blended by no more than to a slight degree with the culture medium and said fertilizer portion being placed in a direct contact with the culture medium portion without a separating layer, screen, web, or membrane, such that the roots of plants are capable of freely penetrating into the fertilizer portion.

The fertilizer portion may also contain small amounts of highly soluble mineral fertilizers. In order to improve its composition and to facilitate the penetration of plant roots, the fertilizer portion can also be admixed with a suitable supplement, such as peat or composted crushed cortex.

The invention introduces a culture medium package, wherein even a small-sized culture medium package can be adapted to accommodate such a large amount of fertilizer that no supplemental fertilization is necessary during a growing season when the package is used for growing plants that require even ample amounts of nutrients.

The non-independent claims disclose preferred embodiments of the invention.

The accompanying drawing depicts two exemplary embodiments of the invention, the more detailed descriptions thereof being set forth hereinbelow.
- Fig. 1: shows an exemplary embodiment 1, wherein a culture medium portion 1 comprises bulky matter placed in a bag; and
- fig. 2: shows an exemplary embodiment 2, wherein a culture medium portion 1 comprises a board-like briquette.

Thus, the culture medium package of the invention contains a culture medium portion 1 and a fertilizer portion 2, which is not blended in the actual culture medium but, instead, the fertilizer within the package is at least substantially separated from the culture medium, yet without a separating screen, web, or membrane which would inhibit the growth of plant roots. The fertilizer portion 2 has a volume which is typically 1/10 - 1/3 of the volume of an entire package. The ingredients and tightness of the fertilizer portion are selected in such a manner that, at least after irrigation, the fertilizer portion 2 will be sufficiently loose or mellow to enable the plant roots to penetrate therein.

The culture medium package of the invention can accommodate many times more fertilizer than a conventional culture medium package, in the which the fertilizer is blended throughout the culture medium. Thus, even a relatively small culture medium package used especially in commercial greenhouse production can be adapted to accommodate such a large amount of fertilizer that no supplemental fertilization during the growing season is needed, even if the package is used for growing plants that require plenty of nutrients.

The harmful effects on a plant resulting from an excessively high nutrient level have been successfully precluded in a culture medium package of the invention as described in the following three points.
1. The fertilizer portion consists of biogenic fertilizers or slowly soluble mineral fertilizers or a mixture thereof. Thus, the nutrients of the fertilizer portion do not migrate very forcefully into the rest of the medium culture portion, which could also result in the concentration of the actual culture medium portion and, thus, the entire culture medium package.
2. By virtue of the solution of the invention, the plant has an access not only to the fertilizer portion but also to the actual culture medium portion, which is mild in terms of its nutrient content and from which the plant is readily able to extract water. Thus, the plant need not suffer from lack of water, although the water intake from the fertilizer portion is often insufficient regarding the total water supply for the plant. Indeed, the explicit objective for a culture medium package solution of the invention is to create conditions, combining a ready water supply for a plant from the mild culture medium portion and a continuously accessible nutrient source from the fertilizer portion with a high nutrient concentration.
3. Proper irrigation technique is used to make sure during the growing season that a difference in nutrient concentrations between the culture medium portion and the fertilizer portion is maintained. This is ascertained by accommodating the irrigation water solely or at least mostly in the culture medium portion which is mild in terms of its nutrient concentration. Water only migrates to the fertilizer portion by trickling from the actual culture medium portion and discharges therefrom during the water and nutrient intake of the plant roots. Thus, water and nutrients migrate from fertilizer portion to culture medium portion in trivial amounts only. The plants naturally extract nutrients also from the culture medium portion and thus, by virtue of the nutrient intake of plants on the one hand and the above-described irrigation technique, on the other, a difference in nutrient levels between the fertilizer portion and the culture medium portion can be maintained throughout the growing season. Irrigation water is only supplied directly into the fertilizer portion when, for some reason, it is desirable to restrict the unimpeded water supply for the plants and to raise the nutrient level of the culture medium portion. This may be necessary e.g. whenever, as a result of e.g. a high air humidity or a low radiation level, the evaporation capacity of plants is very low and an easy water supply from the mild culture medium portion elevates the water content of plant cells to an excessively high level, thereby exposing the plant e.g. to various vegetative diseases.

The culture medium package of the invention is wrapped in a packaging material 4, which may consist of a.o. a plastic sheeting sack, a mesh sack, or various boxes. The culture medium package can also be manufactured e.g. by pressing or otherwise forcing into the shape of e.g. a board or a slab, whereby a separate packaging material is not necessarily required. In a culture medium package of the invention, the culture medium portion 1 may comprise e.g. peat, a blend of peat and mineral soil, or some other suitable plant bed material. The cultural medium portion 1 may be provided with basic fertilization and lime. In this case, however, the fertilizer contained in a culture medium package is mostly included in the fertilizer portion, which is not blended in a culture medium but, instead, placed within a culture medium portion or between culture medium portions in contact with the culture medium portion or portions.

In a culture medium package of the invention, the fertilizer portion 2 may be composed by using solid biogenic fertilizers, slowly soluble mineral fertilizers, mixtures thereof, or other suitable fertilizers. The fertilizers are accommodated in the package so as to be no more than to a slight degree blended within the culture medium portion 1. In terms of the shape thereof, the employed fertilizers can be e.g. granular, powdered, or sizable briquettes.

Suitable for use as storage fertilizers in a culture medium package of the invention are especially solid biogenic or organogenic fertilizers and slowly soluble mineral fertilizers. Thus, the cultural medium portion 1 and the fertilizer portion 2 of a culture medium package can be selected such that the package will be suitable for use also in ecological farming, as this mode of farming is defined in Statute ETY No. 2092/91 of the Council of European Communities, along with amendments made to the same prior to October 31, 1996.

Benefits of the invention are evident especially in greenhouse farming, as so-called restricted plant beds are used for growing vegetables, such as greenhouse cucumber, tomator, or paprika, which require abundant amounts of nutrients.

When using a culture medium package of the invention, it is possible even in ecological farming to gain several work-technical advantages over the farming technique applied thus far:
- it is possible to use a small volume of culture medium, whereby the cost of a culture medium remains lower and the replacement of a culture medium is easier than in traditional plant bed farming.
- the culture medium can be readily insulated from subsoil, whereby the control of a disease and pest situation is easier than in traditional plant bed farming.
- nutrient emissions from culture medium to environment are more readily controlled, as the culture medium can be easily inculated from subsoil.
- no supplemental fertilization is required during the growing season, as the amount of fertilizer needed by the plants is already included in the culture medium package.
- the plant bed can be built at the start of a growing season by laying the fertilizer-containing culture medium packages side by side or one after another to gain a substantial saving in labour input compared with methods currently applied in ecological greenhouse production.

The culture medium package of the invention offers certain benefits over current farming methods also in terms of the growing conditions of plants. These benefits can be exploited in both ecological and conventional greenhouse production.
- In the culture medium thereof, the plants have an access both to a portion of a low nutrient concentration and to a portion of a high nutrient concentration. Thus, the plant roots are able to diversify and specialize on the one hand to extract primarily water from the low-concentration portion of culture medium and, on the other hand, primarily nutrients from the high-concentration portion of culture medium.
- The water supply for plants from the low-concentration portion of culture medium occurs easily and, thus, the plants are not as susceptible to suffer from the lack of water as in the case of conventional plant beds.
- The fertilizer portion can be used for storing a sufficient amount of nutrients for an entire plant growing season. Thus, the plants are not forced to suffer even temporarily from the lack of nutrients as a result of unbalance between the intakes of fertilization and nutrients.

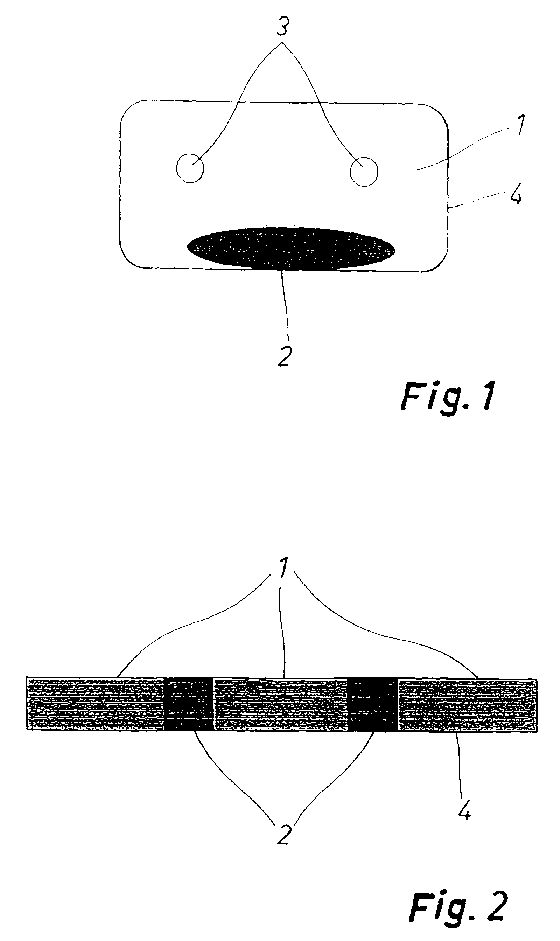

### Application example 1 (fig. 1)

A growing bag containing a stored-in fertilization portion for ecological tomato farming. The sack is intended for two tomato seedlings, a growing period of nine months, and the stored-in fertilization is dimensioned for a crop yield level of 15 kg of tomato/seedling.

A culture medium portion 1 of the growing bag contains appr. 40 litres of a specially coarse peat-sand mixture, which is basically fertilized with composted broiler manure (80 litres/m³) and limed with magnesium-containing limestone powder (7 kg/m³).

A fertilizer portion 2 of the growing bag contains about 6 kg (appr. 10 litres) of dried manure grains made of composted broiler manure
(N 4 %, P 1,5 %, K 2 %).

The growing bag has a wrapping made of a plastic polyethylene sack 4, provided with planting holes 3 for two tomato seedlings.

During the growing season, the tomato plants are not given supplemental fertilization. Irrigation is most preferably done by using a drip or seepage irrigation technique, with pure water.

### Application example 2 (fig. 2)

A growing bed containing a stored-in fertilization portion for ecological farming of greenhouse cucumber. The bed is intended for three cucumber seedlings, a growing period of four months, and the stored-in fertilization is dimensioned for a crop yield level of 10 kg of cucumber/seedling.

A culture medium portion 1 of the growing bed consists of three peat briquettes of about 15 litres, which are made of specially coarse peat, basically fertilized with composted broiler manure (80 litres/m³), and limed with magnesium-containing limestone powder (7 kg/m³).

A fertilizer portion 2 of the growing bag contains two fertilizer briquettes of about 2,5 kg, which are made of a mixture of composted broiler manure and molasses extract (N 4 %, P 1,5 %, K 6 %). The fertilizer briquettes are set between the culture medium briquettes. Upon moistening, the fertilizer briquette swells, enabling the penetration of plant roots into the fertilizer portion.

The growing bag has a wrapping 4 made of a plastic polyethylene sack or a mesh stocking.

During the growing season, the cucumber plants are not given supplemental fertilization. Irrigation is most preferably done by using a drip or seepage irrigation technique, with pure water. In order to balance the moisture, it is preferable to lay under the bed an irrigation mat or e.g. a layer of about 2 cm of coarse, limed peat.

## Claims

1. A culture medium package for growing plants especially in greenhouse production, **characterized** in that the culture medium package contains a basically fertilized or non-fertilized culture medium portion (1) and a fertilizer portion (2), consisting of at least primarily organogenic fertilizers or slow-dissolving mineral fertilizers or a mixture thereof, the fertilizer contained therein being blended by no more than to a slight degree with the culture medium and said fertilizer portion being placed in a direct contact with the culture medium portion without a separating layer, screen, web, or membrane, such that the roots of plants are capable of freely penetrating into the fertilizer portion.

2. A culture medium package as set forth in claim 1, **characterized** in that the culture medium portion (1) comprises a bed manufactured by briquette-pressing or by cutting from so-called block peat.

3. A culture medium package as set forth in claim 1 or 2, **characterized** in that the fertilizer portion (2) is shaped by pressing into a compact briquette, which swells upon moistening to enable the penetration of plant roots into the fertilizer portion and which is placed within the culture medium portion (1) or between the culture medium portions (1) in contact with the culture medium portion or portions.

4. A culture medium package as set forth in any of claims 1-3, **characterized** in that the package has a wrapping (4) made of a plastic sack or a mesh stocking.

5. A culture medium package as set forth in claim 1, **characterized** in that the culture medium portion (1) comprises a basically fertilized and limed peat-sand mixture and the fertilizer portion (2) contains manure grains made of composted broiler manure, and the package wrapping (4) comprises a plastic sack provided with at least one planting hole (3).

6. A culture medium package as set forth in any of claims 1-5, **characterized** in that the fertilizer portion (2) has a volume which is 1/10 - 1/3 of the entire package volume and that, at least after irrigation, the fertilizer portion is sufficiently bulky for enabling the penetration of plant roots therein.
